# EUROPEAN PATENT SPECIFICATION

(11) **EP 0 514 078 B1**
(45) Date of publication and mention of the grant of the patent: **06.08.1997**
(21) Application number: 92304092.7
(22) Date of filing: 07.05.1992
(51) Int. Cl.: G08C 23/00, H04B 7/15

(54) **Signal relay device**
Signalrelaisvorrichtung
Dispositif rejeteur de signal

(30) Priority: 09.05.1991 GB 9110080
(43) Date of publication of application: 19.11.1992
(73) Proprietor: Knecht, Gerhard Werner, London SW3 2BS (GB)
(72) Inventor: Knecht, Gerhard Werner, London SW3 2BS (GB)
(74) Representative: Senior, Alan Murray

(56) References cited:
- WO-A-89/11137
- DE-U- 9 101 052
- GB-A- 2 140 182
- GB-A- 2 149 947
- US-A- 4 809 359
- PATENT ABSTRACTS OF JAPAN vol. 7, no. 33 (E-157) 9 February 1983 & JP-A-57 185 752
- PATENT ABSTRACTS OF JAPAN vol. 10, no. 363 (E-461)(2420) 5 December 1986 & JP-A-61 161 037

## Description

The present invention relates to a device for receiving broadcast signals in one location and relaying them to another location for re-broadcast and in particular to such a device for use with remote control apparatus.

There is presently a wide range of electric and electronic consumer articles which can be controlled by remotely controlled devices, for example televisions, video recorders, stereo systems, garage doors, alarm systems, light switches, air conditioning and telephone answering machines. The majority of such units use infrared signals to communicate between the remote control unit and the item to be controlled, while others use ultrasonic or radio signals. All, however, suffer from the disadvantage that the remote unit can only communicate with the remotely controlled unit if it is within a particular range of the remotely controlled devices, usually of the order of up to 8 metres. Many remotely controlled devices also require the path between the unit and the handset to be unobstructed, however some can adequately receive signals reflected from walls or windows or the like.

The range over which the remotely controlled unit can be successfully controlled is generally determined by the power of the signal broadcast by the remote control unit. As these devices are generally battery powered and it is desirable to keep their weight low it is difficult to extend the usable range and in any case infrared and ultrasonic remote control units cannot operate from locations completely separated from the remotely controlled device.

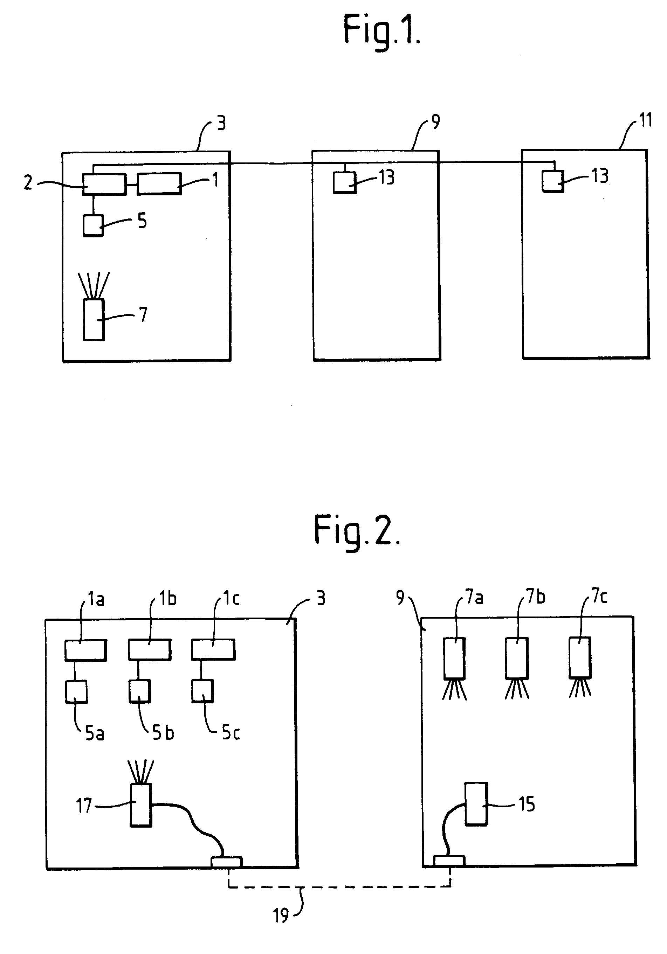

A system for enabling remote control units to be used in other rooms than the remotely controlled device is produced by Bang & Olufson. This system is shown schematically in Figure 1. The main audio system 1 is installed in a first room 3 and is provided with a sensor 5 and control box 2 for picking up signals from the remote control unit 7. When the remote control unit 7 is in the first room 3 signals emitted by it are picked up by sensor 5 and interpreted by the audio system 1. However, if it is desired to be able to control the audio system from further rooms 9 and 11 additional sensors 13 must be installed in these rooms and linked to the audio system 1 by cable. This system has two major disadvantages. Firstly, the additional sensors must be installed and linked to the main audio system in advance and secondly, the system only functions with equipment from the one manufacturer. It would not be plausible to adapt this system for use with equipment from several manufacturers because of the lack of standardisation of control signals and the lack of any standard input. It also requires the ability to connect a controller box or more than one sensor to the audio system. Ordinary audio systems do not provide such a connection.

GB 2 140 182 (Xantech) discloses a system of extending the range of remote control units using one first repeater and a plurality of second repeaters. This is achieved via the use of a dedicated conductor based transmission link. The remote control signals are relayed and transmitted without interpretation.

GB-A-2,217,544 (Dockery) discloses a non-proprietory system for extending the range of infrared remote control units using a plurality of first repeaters and at least one second repeater which communicate via uhf radio signals.

According to the present invention there is provided: apparatus for extending the effective operational range of an infrared remote control unit with an infrared transmitter and a controlled device having an infrared receiver remote from the infrared transmitter, said system comprising:
a first repeater to be placed, in use, within the operational range of the remote control unit and having:
means for receiving a modulated infrared signal and for generating an electrical signal representative thereof;
means for demodulating the said electrical signal and for generating an unmodulated electrical signal representative of the envelope of said infrared signal;
means for correcting errors to create a cleaner unmodulated electrical signal;
means to create a re-modulated signal representative of the said cleaner unmodulated signal,
means responsive to said re-modulated electrical signal for transmitting it via mains wiring, and
a second repeater to be placed, in use, physically close to the controlled device and having:
means for receiving said re-modulated electrical signal from the mains wiring and for generating an unmodulated electrical signal representative thereof;
means to modulate said unmodulated electrical signal at a carrier frequency suitable for the controlled device, thus creating a modulated signal representative of the said unmodulated electrical signal;
means responsive to said modulated electrical signal for transmitting an infrared signal representative thereof toward the controlled device;
wherein said means for receiving said infrared signal comprises an infrared photodetector, and
said infrared transmitter comprises an infrared emitter.

The present invention will be further described hereinafter with reference to the following description of an exemplary embodiment and the accompanying drawings in which:
Figure 1 shows a prior art system for providing remote control of an audio system;
Figure 2 shows schematically the signal relay arrangement of the present invention;
Figure 3 shows the circuitry used in an embodiment of the present invention;
Figure 4 shows an optional noise/error suppression gate for use with embodiments of the present invention;
Figures 5a and b show a noisy signal and a signal having been filtered by the noise/error suppression gate; and
Figure 6 shows a simplified flow diagram of a program for correcting errors.

The general arrangement of the present invention is shown in Figure 2. A number of remotely controlled devices 1a, 1b, 1c with respective sensors 5a, 5b, 5c are located in a first room 3. However, their respective remote control units 7a, 7b, 7c are located in a second room 9 from which it is desired to control the remotely controlled devices. The remotely controlled devices might include video recorders, televisions, radios, CD players etc. When the user wishes to control one of the remotely controlled devices he depresses the appropriate button on the remote control unit which emits an appropriate signal. This signal is picked up by a receiver 15 and relayed to the broadcast unit 17 along a communications link 19. Essentially the receiver 15 simply converts the signal from the remote control unit into an electrical or other signal which is transmitted to the broadcast unit 17 which then reconverts this into a signal functionally identical to that broadcast by the remote control unit and broadcasts it toward the remotely controlled device.

Because the remote control extender does not interpret the signal it receives in any way but merely re-broadcasts a substantially identical signal it is usable with remotely controlled devices and remote control units of any manufacturer without the need for any modification of either. The remote control extender is entirely transparent to the controlled devices and controlling units. The communication link 19 between the receiver and broadcast units of the remote control extender may be conveniently made by existing domestic mains wiring. Because the broadcast unit 17 need not be portable it can be as powerful as required and thus may be situated anywhere convenient in the room so that it is not obtrusive.

The broadcast and receiver units of the remote control extender can draw their power from the mains power supply via the mains wiring used to provide the communications link.

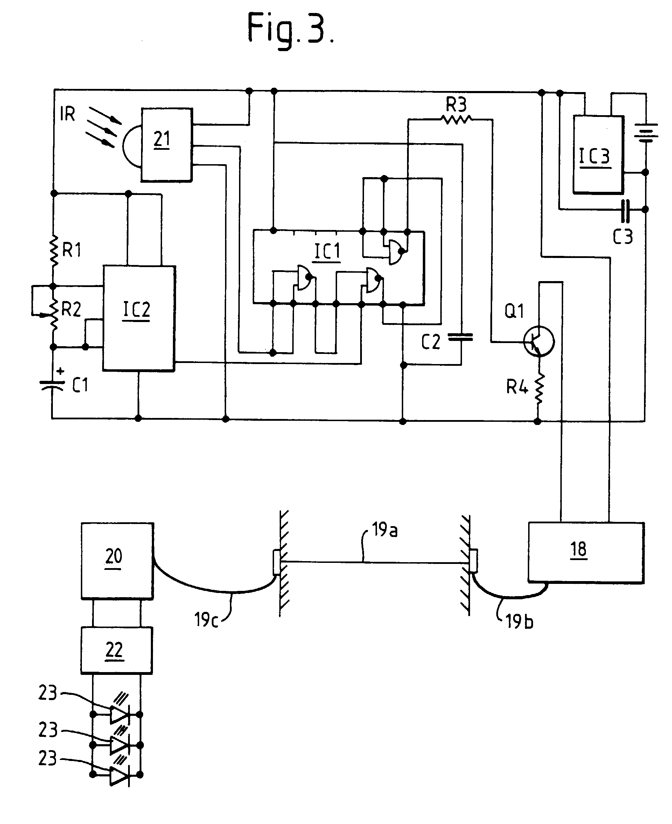

The remote control extender unit shown in Figure 3 operates successfully with all infrared remote control units using a signal modulation frequency at around 40 kHz (+/- 4 kHz) and an infrared passband of 980nm +/- 100nm. Since most infrared remotely controlled devices operate within these values, the remote control extender can be used with virtually all infrared remotely controlled devices.

The remote control extender receiver receives the signal using a commercially available infrared detector unit (GP1U52X). This unit receives the infrared signal modulated by some form of pulse coding, e.g. PWM or PCM, and demodulates this, outputting the unmodulated pulse signal but inverted. This signal is reinverted and remodulated with a suitable carrier frequency (square wave) generated by a 555-timer unit. The resulting signal is then amplified and forwarded to the remote control extender transmitter through domestic mains cables, where it is demodulated, for example using a 567 tone decoder, and remodulated at 40 kHz, using a 555 timer as above.

The transmitter transforms the electrical signals into a modulated infrared signal, using 3 infrared LEDs. It was found that one LED of the type first used did not provide an adequate operating range. The range (distance) from the transmitter to the remotely controlled device over which it can be reliably controlled is similar or superior to the range of the associated remote control (4-7 meters). With adequate amplification ranges of upto several times the normal range of a handheld remote control unit can be achieved.

The detector 21 receives infrared signals in the band (980 +/-100)nm modulated at 40 +/- 4 kHz. The received signal is passed to IC1 which has three NAND gates. The received signal is supplied to both inputs of the first gate which thus reinverts it to its original polarity. This signal is passed to the one input of the second gate with the second input being supplied with a carrier frequency signal generated by IC2. The NAND gate remodulates the signal and delivers the final signal in inverted form. The remodulated signal is passed to both inputs of a third NAND gate to invert it again and is amplified by transistor Q1 and passed through the mains cabling 19c to infrared LEDs 23 for broadcast to the remotely controlled device. Connectors 18 and 20 suitably prepare the signal for insertion into the mains cabling and also isolate the transmitter and receiver units from the mains AC voltage. Unit 22 demodulates the signal sent by the mains, for example using a 567 tone decoder and remodulates the envelope signal at 40 kHz using a 555 timer and nand gates as described above.

Resistors R1 and R2 and capacitor C1 control the frequency of the signal generated by IC2 while IC3 is a power regulator to provide a regular power supply to the circuit. The values of resistors R3 and R4 will depend on the transistor Q1 used. Obviously, further broadcast units in additional locations could be added if it was desired to be able to control devices in more than one location and further receiver units could be added, feeding the signals to one or several broadcast units if desired. A remote control extender unit can also relay signals received from another remote control extender.

The carrier frequency generated by IC2 can be varied (by changing of R2) to allow multiple units to operate within close vicinity (e.g., the next house) without interfering with each other's signals. In this situation, R2 represents what is normally called a house code.

With the system described above, random infrared signals caused by lights, heaters or other electrical signals are picked up by the receivers modulated and broadcast by the broadcast unit. This has no effect on the remotely controlled devices since they have appropriate filters to eliminate noise and will thus ignore the spurious emissions from the broadcast unit of the remote control extender, in the same way that they ignore other random infrared signals. However, in a noisy environment, or if many receivers are being used, the resulting noise can severely impair the functioning of the Remote-Control Extender.

A modified version therefore includes a shift register and a gate between the infrared detector/demodulator 21 and IC1. The decoded signal is fed into the shift register which is clocked at an appropriate frequency and thence through the gate to IC1. The gate is controlled by a logic circuit which monitors the contents of the shift register and only opens the gate when a control signal is identified. The criterion which are used to identify a control signal above the noise will vary according to implementation but might include requirements on the runlength of high bits in the register or the number of high bits.

In an improved embodiment of the remote control extender a noise suppressor gate was added between the output of the first NAND gate on IC1 and one input to the second.

The noise suppression gate includes a shift register IC4 which is supplied with the pulse modulated signal and is clocked with a period shorter (by a factor of approximately 5 to 30) than the length of the shortest valid signal pulse. Four, four input NAND gates 25a-d are connected to bits 0 to 3, 1 to 4, 2 to 5 and 3 to 6 respectively of the shift register. When a pulse which is four clock cycles long enters the register it will trigger AND gates 25a-d in turn as it moves through the register. The outputs of AND gates 25a-d are OR-ed by OR gate 27 whose output will thus be high for four clock cycles. A longer pulse will trigger each AND gate more than once and OR gate 27 will be high for a corresponding length of time. A pulse shorter than four cycles will not trigger any of the AND gates and therefore there will be no output from the circuit.

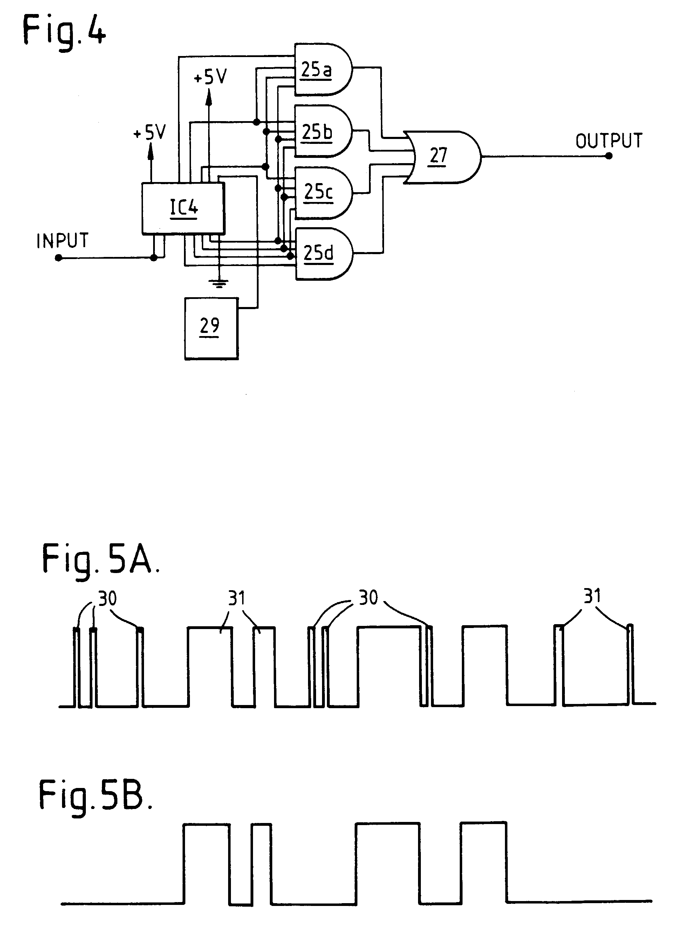

Since noise pulses are usually shorter than genuine signal pulses by suitable choice of the clock period of the shift register, noise pulses can be rejected while genuine pulses are passed through. Figures 5a and b illustrate this; Figure 5a shows the noisy input signal and Figure 5b the cleaned up output signal.

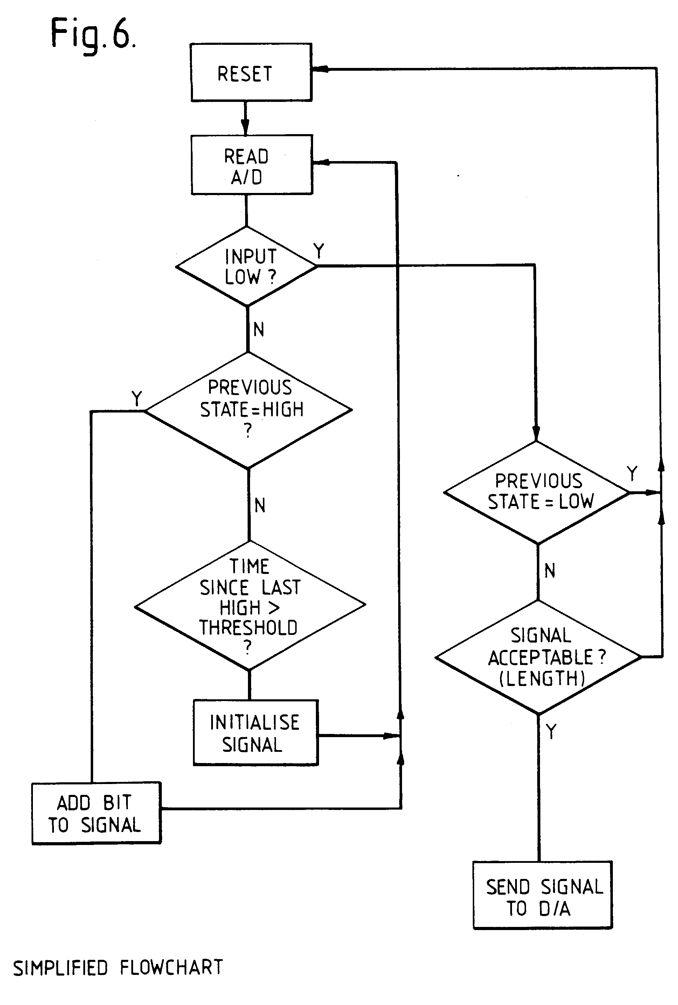

A further improved noise/error correction facility is provided by connecting the unmodulated signal to an Analog/Digital converter connected to a computer. A computer program can then monitor the signals, filter out the noise and forward the cleaned signal to a Digital/Analog converter which reconstitutes an analog electrical signal. Figure 6 illustrates a sample computer program flowchart to achieve this.

## Claims

1. Apparatus for extending the effective operational range of an infrared remote control unit with an infrared transmitter and a controlled device having an infrared receiver remote from the infrared transmitter, said system comprising:
a first repeater (15) to be placed, in use, within the operational range of the remote control unit and having:
means (21) for receiving a modulated infrared signal and for generating an electrical signal representative thereof,
means (21) for demodulating the said electrical signal and for generating an unmodulated electrical signal representative of the envelope of said infrared signal,
means (1C4, 2, 5A-D, 27) for correcting errors to create a cleaner unmodulated electrical signal,
means to create a re-modulated signal representative of said cleaner unmodulated signal, and
means (18, 20) responsive to said re-modulated electrical signal for transmitting it via mains wiring, and
a second repeater (17) to be placed, in use, physically close to the controlled device and having:
means (20) for receiving said re-modulated electrical signal from the mains wiring and for generating an unmodulated electrical signal representative thereof,
means (22) to modulate said unmodulated electrical signal at a carrier frequency suitable for the controlled device, thus creating a modulated signal representative of the said unmodulated electrical signal, and
means (23) responsive to said modulated electrical signal for transmitting an infrared signal representative thereof toward the controlled device;
wherein said means for receiving said infrared signal comprises an infrared photodetector, and
said infrared transmitter comprises an infrared emitter.

2. Apparatus according to claim 1, comprising a plurality of first repeaters (15) and wherein said second repeater (17) is adapted to receive signals from any one of said plurality of first repeaters which may be provided at different first locations.

3. Apparatus according to claim 1 or 2, comprising a plurality of second repeaters (17) adapted to receive signals from any first repeater (15).

4. An apparatus according to claim 1, 2 or 3, wherein said means for correcting errors comprises a shift register (1C4) supplied with the unmodulated envelope signal and gate means (25A-D, 27) connected to the segments of said shift register, said gate means being adapted to provide a high output when a predetermined number or combination of said segments of said shift register are high.

5. An apparatus according to claim 1, 2 or 3, wherein said means for correcting errors comprises an analogue to digital converter, processor means and a digital to analogue converter.

## Patentansprüche

1. Vorrichtung zum Erweitern des wirksamen Betriebsbereichs einer einen Infrarotsender aufweisenden Infrarot-Fernsteuereinheit und eines gesteuerten Geräts mit einem Infrarot-Empfänger, der von dem Infrarotsender entfernt ist, umfassend:
eine erste Relaisstation (15), die im Gebrauch in dem Betriebsbereich der Fernsteuereinheit angeordnet wird und aufweist:
eine Einrichtung (21) zum Empfangen eines modulierten Infrarotsignals und zum Erzeugen eines dafür repräsentativen elektrischen Signals,
eine Einrichtung (21) zum Demodulieren des elektrischen Signals und zum Erzeugen eines unmodulierten elektrischen Signals, welches repräsentativ ist für die Hüllkurve des Infrarotsignals,
eine Einrichtung (1C4, 2, 5A-D, 27) zum Korrigieren von Fehlern, um ein saubereres unmoduliertes elektrisches Signal zu bilden,
eine Einrichtung zum Bilden eines neu-modulierten Signals, welches repräsentativ ist für das sauberere unmodulierte Signal, und
eine Einrichtung (18, 20), die auf das neu-modulierte elektrische Signal anspricht, um es über ein Netzleitungssystem zu senden, und
eine zweite Relaisstation (17), die im Gebrauch physisch nahe des gesteuerten Geräts angeordnet wird, und die aufweist:
eine Einrichtung (20) zum Empfangen des neu-modulierten elektrischen Signals von dem Netzleitungssystem und zum Erzeugen eines dafür repräsentativen, unmodulierten elektrischen Signals,
eine Einrichtung (22) zum Modulieren des unmodulierten elektrischen Signals mit einer Trägerfrequenz, die für das gesteuerte Gerät geeignet ist, um dadurch ein moduliertes Signal zu bilden, welches repräsentativ ist für das unmodulierte elektrische Signal, und
eine Einrichtung (23), die auf das modulierte elektrische Signal anspricht, um ein für dieses repräsentatives Infrarotsignal zu dem gesteuerten Signal zu senden;
wobei die Einrichtung zum Empfangen des Infrarotsignals einen Infrarot-Photodetektor aufweist, und
der Infrarotsender einen Infrarot-Emitter aufweist.

2. Vorrichtung nach Anspruch 1, umfassend eine Mehrzahl erster Relaisstationen (15), wobei die zweite Relaisstation (17) dazu ausgebildet ist, Signale von irgendeiner der mehreren ersten Relaisstationen zu empfangen, die sich an unterschiedlichen ersten Stellen befinden können.

3. Vorrichtung nach Anspruch 1 oder 2, umfassend eine Mehrzahl zweiter Relaisstationen (17), die dazu ausgebildet sind, Signale von irgendeiner ersten Relaisstation (15) zu empfangen.

4. Vorrichtung nach Anspruch 1, 2 oder 3, bei der die Einrichtung zum Korrigieren von Fehlern ein Schieberegister (1C4) aufweist, dem das unmodulierte Hüllkurvensignal zugeführt wird, ferner eine Gatteranordnung (25A-D, 27), die an die Stufen des Schieberegisters angeschlossen ist, wobei die Gatteranordnung derart ausgebildet ist, daß sie ein hohes Ausgangssignal dann liefert, wenn eine vorbestimmte Anzahl oder eine Kombination der Stufen des Schieberegisters einen hohen Pegel aufweist.

5. Vorrichtung nach Anspruch 1, 2 oder 3, bei dem die Einrichtung zum Korrigieren von Fehlern einen Analog-Digital-Wandler, eine Prozessoreinrichtung und einen Digital-Analog-Wandler aufweist.

## Revendications

1. Appareil pour augmenter le rayon d'action effectif d'une unité de commande à distance à infrarouge avec un transmetteur infrarouge et un dispositif commandé ayant un récepteur infrarouge éloigné au transmetteur infrarouge, ledit système comprenant :
- un premier répéteur (15) à placer, pendant l'utilisation, à l'intérieur du rayon d'action de l'unité de commande à distance et ayant :
- un moyen (21) pour recevoir un signal infrarouge modulé et pour générer un signal électrique représentatif de celui-ci,
- un moyen (21) pour démoduler ledit signal électrique et pour générer un signal électrique non modulé représentatif de l'enveloppe dudit signal infrarouge,
- un moyen (1C4, 2, 5A-D, 27) pour corriger des erreurs afin de créer un signal électrique non modulé plus propre,
- un moyen pour créer un signal remodulé représentatif dudit signal non modulé plus propre, et
- un moyen (18, 20) réagissant audit signal électrique remodulé pour le transmettre via les fils du secteur, et
- un second répéteur (17) à placer, pendant l'utilisation, physiquement près du dispositif commandé et ayant :
- un moyen (20) pour recevoir ledit signal électrique remodulé provenant des fils du secteur et pour générer un signal électrique non modulé représentatif de celui-ci,
- un moyen (22) pour moduler ledit signal électrique non modulé à une fréquence porteuse convenant pour le dispositif commandé, en créant ainsi un signal modulé représentatif dudit signal électrique non modulé, et
- un moyen (23) réagissant audit signal électrique modulé pour transmettre un signal infrarouge représentatif de celui-ci vers le dispositif commandé ;
dans lequel ledit moyen de réception dudit signal infrarouge comprend un photo détecteur infrarouge, et
ledit transmetteur infrarouge comprend un émetteur infrarouge.

2. Appareil selon la revendication 1, comprenant une pluralité de premiers répéteurs et dans lequel ledit deuxième répéteur (17) est adapté pour recevoir des signaux de l'un quelconque des premiers répéteurs de ladite pluralité qui peuvent être fournis dans des premiers endroits différents.

3. Appareil selon l'une des revendications 1 et 2, comprenant une pluralité de deuxièmes répéteurs (17) adaptés pour recevoir des signaux en provenance d'un premier répéteur quelconque (15).

4. Un appareil selon l'une des revendications 1, 2 et 3, caractérisé en ce que ledit moyen de correction d'erreurs comprend un registre à décalage (IC4) recevant le signal d'enveloppe non modulé et un moyen de porte (25A-D, 27) connecté aux segments dudit registre à décalage, ledit moyen de porte pouvant fournir une sortie élevée lorsqu'un nombre ou une combinaison prédéterminé desdits segments dudit registre à décalage sont élevés.

5. Un appareil selon l'une des revendications 1, 2 et 3, caractérisé en ce que ledit moyen de correction d'erreurs comprend un convertisseur analogique/numérique, un moyen de processeur et un convertisseur numérique/analogique.
